# EUROPEAN PATENT APPLICATION

(11) **EP 2 671 783 A2**
(43) Date of publication of application: **11.12.2013**
(21) Application number: 13171230.9
(22) Date of filing: 10.06.2013
(51) Int. Cl.: B62D 33/063, B66C 13/54

(54) **Cabin arrangement for a crane**

(30) Priority: 08.06.2012 SE 1250599
(71) Applicant: Cargotec Finland Oy, 21201 Raisio (FI)
(72) Inventor: Jonsson, Ingvar, 820 40 Järvsö (SE); Jansson, Jörgen, 827 93 Ljusdal (SE); Schulstad, Jens, 827 00 Ljusdal (SE)
(74) Representative: Engdahl, Stefan

(57) **Abstract**

The invention relates to a cabin arrangement of the type which is intended to be mounted on a crane post of a crane, comprising a control cabin which delimits an internal space for a crane operator when controlling the crane, a support frame (10) which is adapted to be firmly connected to the crane post, a first linear guide arrangement which is connected to the control cabin and is in displaceable engagement with a matching second linear guide arrangement (16) which is connected to the support frame, and a lifting arrangement comprising a hydraulic cylinder (26) which is telescopically extensible and retractable in such a way that the control cabin is securely connected to the crane post via the support frame while at the same time, by means of the first and second linear guide arrangements and by extension or retraction of the hydraulic cylinder, it is movable along the crane post between a lowered transporting position and a raised working position. It comprises a transport-securing arrangement having at least one first transport-securing element (48), which is connected to and movable together with the control cabin, and at least one second transport-securing element (31), which is connected to the support frame (10), the first and second transport-securing elements being designed to automatically engage with each other when the control cabin reaches its lowered transporting position.

## Description

The present invention relates to a cabin arrangement of the type which is intended to be mounted on a crane post of a crane, comprising a control cabin which delimits an internal space for a crane operator when controlling the crane, a support frame which is adapted to be firmly connected to the crane post, a first linear guide arrangement which is connected to the control cabin and is in displaceable engagement with a matching second linear guide arrangement which is connected to the support frame, and a lifting arrangement comprising a hydraulic cylinder which is telescopically extensible and retractable in such a way that the control cabin is securely connected to the crane post via the support frame while at the same time, by means of the first and second linear guide arrangements and by extension or retraction of the hydraulic cylinder, it is movable along the crane post between a lowered transporting position and a raised working position.

### Background of the invention

It is already known to mount a cabin arrangement or control cabin directly on a crane for loading and unloading goods onto and from a transportation vehicle, for example for loading and unloading timber onto and from a timber truck. The reason why the control cabin is mounted directly on the crane is that the crane operator should have a good view of the manoeuvring of the crane during the loading procedure. To further improve the view of the crane operator, such control cabins are mounted so as to be movable along a crane post of the crane between a lowered transporting position when driving the vehicle, in which position the crane operator can also easily get into and out of the cabin, and a raised working position, in which the crane operator has a good view of the manoeuvring of the crane and of the top face of the timber load in the timber truck.

A common way of mounting a control cabin of this kind on a crane post has been to mount a stationary support frame on the crane post and to secure the control cabin on a movable support frame which is firmly screwed on along one side of the control cabin and is additionally provided with cantilever beams which extend out sideways from the support frame and form a horizontal bearing surface against which the underside of the control cabin rests. The stationary support frame on the crane post and the movable support frame that supports the control cabin are also movably connected to each other via some type of linear guide arrangement, such that the control cabin and the movable support frame can be moved up and down along the crane post and the stationary support frame with the aid of a hydraulic cylinder. A disadvantage of mounting the control cabin on the crane post in this way is that the stationary and movable support frames take up quite a lot of space, which limits the maximum possible internal space inside the control cabin, and they have quite a large weight, which limits the maximum possible loading capacity of the timber truck. Since the movable support frame extends substantially along the entire side wall of the control cabin and is screwed firmly thereto, the view available to the crane operator in this direction is almost non-existent, even though the control cabin is provided with a window in this side wall. This is a great disadvantage during loading, since it makes manoeuvring the crane more difficult and additionally increases the risk of accidents, since the crane operator has trouble seeing if a vehicle or a person is approaching from this direction.

EP 2 261 107 A1 discloses and describes a control cabin for a crane, which has solved some of the abovementioned problems. This control cabin is not provided with any movable support frame mounted along the outside of one side wall and the underside. Instead, the control cabin is movable along a support frame, mounted fixedly on the crane post, via a linear guide arrangement which is integrated in the side wall of the control cabin. More specifically, the side wall is provided with an inward groove or channel, in the side surfaces of which guide rails are mounted behind which flanges of the stationary support frame can engage and be moved. However, there are still several disadvantages with such a design of the control cabin. It is true that the operator's view through the side wall mounted against the crane post has been improved by comparison with previously known control cabins. However, for reasons of strength and stability, the guide rails have to extend quite high up on the wall and, in the embodiment shown, they extend upwards to about 55% of the height of the control cabin between floor and roof. This means that only a relatively small window can be fitted in this side wall, which of course limits the view available to the operator, especially in an obliquely downward direction. Moreover, the inward channel in the side wall of the control cabin encroaches on the maximum possible internal space in the control cabin. In addition, a control cabin of this kind is probably relatively expensive to produce, on the one hand because of the extra production steps that are needed to form a side wall with an inward channel, and, on the other hand, because of the specially shaped connection components that are needed and the special design of the parts of the rest of the control cabin that have to be connected to this side wall. In addition to this, the side wall provided with the channel needs to be provided with extra reinforcements in order to withstand the stresses that occur, and this contributes to increased costs and reduced internal space. A guide arrangement formed in this way also probably gives rise to a lot of noise when driving the crane and the vehicle, since the outwardly projecting flanges of the stationary support frame have to be fitted in with certain play between the guide rail and the wall of the control cabin in order to ensure that the guide arrangement does not jam during operation.

In recent times, new constructions of cabin arrangements for mounting on crane posts have appeared on the market, where the attachment of the control cabin to the support frame is placed very low down on the control cabin, more specifically in a position which is at least on the lower half of the overall height of the control cabin between floor and roof. This is achieved by the fact that a sleeve-shaped attachment mounted on the control cabin slides along some form of guide or linear guide arrangement of the support frame. With a cabin arrangement configured in this way, the crane operator is afforded a considerably better view during loading. However, a disadvantage is that the stability of the control cabin is reduced both in the transporting position and also in the working position as a result of the attachment being placed low down on the control cabin, since even a slight clearance and small changes of angle between the linear guide arrangements of the support frame and of the control cabin cause substantial horizontal movements at the upper end of the control cabin. This can be uncomfortable for the crane operator and can also give rise to annoying noises since the control cabin can rock back and forth both during transport, when the control cabin is in the transporting position, and also during working with the crane, when the control cabin is in the working position.

### Brief disclosure of the invention

The object of the present invention is to make available a cabin arrangement which avoids the problems and disadvantages of previously known cabin arrangements and which in particular has a design which, during transport, permits a steadier positioning of the control cabin and a reduction in disruptive noise. At least this object is achieved by a cabin arrangement according to patent claim 1.

Further objects and advantages of the invention will become clear from the following description of the invention.

The invention is thus based on the realization that this object can be achieved by a cabin arrangement which is provided with a transport-securing arrangement having at least one first transport-securing element, which is connected to and movable together with the control cabin, and at least one second transport-securing element, which is connected to the support frame, the first and second transport-securing elements being designed to automatically engage with each other when the control cabin reaches its lowered transporting position.

The cabin arrangement can be designed in many different ways within the scope of this overarching inventive concept. In the embodiment of the cabin arrangement shown and described hereinbelow, the transport-securing arrangement has the form of a first transport-securing element on the control cabin, in the form of two holes arranged in the same plate with which the piston rod of the hydraulic cylinder is connected in the upper part of the control cabin, and a second transport-securing element on the support frame, in the form of two upright conical pegs in the upper end of the support frame. When the control cabin, during the lowering movement, is about to reach its lower transporting position, the tips of the conical pegs are driven into the holes and, during continued lowering, the holes are centred on the pegs and, since the lowermost parts of the pegs have a cross-sectional dimension greater than the cross-sectional dimension of the holes, the control cabin finally comes to hang free of play with its entire weight on the pegs. To further avoid the risk of disruptive noise and produce soft braking of the control cabin when it reaches its lowermost transporting position, the pegs in the preferred embodiment are designed with a hard core, e.g. of steel, which is lined with an elastic material of rubber or plastic.

However, the transport-securing arrangement would be able to be designed in many different ways than that described above. For example, it does not have to consist of just two pegs and two holes, as any other desired number would also be possible. Moreover, the pegs should be able to be arranged on the control cabin and directed downwards, while the holes are instead arranged on the support frame. The pegs do not have to be just conical with a circular cross section, and instead some other narrowing shape could also be conceivable. It is also not necessary for the pegs to be made of or covered with an elastic material, and instead the transport-securing arrangement could be entirely without an elastic material. The wider part of the pegs does not need to have a greater cross-sectional dimension than the holes, although this is preferred, since the bearing of the pegs in the holes or recesses is then free of play. Moreover, the holes do not need to be through-holes, and instead they could have the form of recesses or hollows, and, instead of the pegs being made of or lined with an elastic material, the holes or recesses could be made of or internally lined with an elastic material. A person skilled in the art in this field will appreciate that further alternative designs other than those listed here will be possible within the scope of the invention as it is defined in the patent claims.

In order to obtain a correspondingly stable securing of the control cabin in its raised working position too, the invention, as set forth in claims 7-10, proposes that the cabin arrangement is provided with a work-securing arrangement having at least one first work-securing element, which is connected to and movable together with the control cabin, and at least one second work-securing element, which is connected to the support frame, the first and second work-securing elements being designed to automatically engage with each other when the control cabin reaches its raised working position. In the design shown and described hereinbelow, and in a similar way to the transport-securing arrangement, the first work-securing element has the form of holes, while the second work-securing element has the form of conical pegs. However, the conical pegs are not made of or lined with an elastic material, although it should be understood that they could be, and the invention should also be able to be modified in a similar way as has been explained above with respect to the transport-securing arrangement.

In order to avoid instability and disruptive noise of the control cabin both during transport and also during work, it is also advantageous if the linear guide arrangements, which connect the control cabin to the support frame, have as little play as possible. This is achieved with linear guide arrangements designed according to the invention as set forth in claims 11-15. In the embodiment shown, the linear guide arrangement of the control cabin has the form of two projections which extend outwards from the side wall and which are mounted on the outside of a substantially smooth wall surface by screwing. In order to ensure that the wall portion of the control cabin where the linear guide arrangement is screwed will be able to withstand the stresses from the inherent weight of the control cabin and from the weight of the operator, the wall portion has extra reinforcement, as will be described more closely in the detailed description, and a box-shaped raised part in the rear lower part of the control cabin, intended to be used as a base for a seat for the operator, is used to stiffen the control cabin. By placing the linear guide arrangement of the control cabin low down on the control cabin, a space under the crane operator's seat can be used for reinforcement and as a load-bearing structure which stiffens the control cabin and allows the latter to be supported to a large extent by an advantageously short and space-saving linear guide arrangement. In the illustrative embodiment, this space more specifically accommodates a supporting structure in the form of a raised part which is used as a base for the crane operator's seat, and further stiffening and load-bearing structural components can be accommodated in the raised part. In this way, a large part of the load-bearing structure can be located in a space which is not so well utilized, and more space can be freed up in the rest of the control cabin for the crane operator.

In the embodiment of the invention shown and described below, the linear guide arrangement of the control cabin is designed as two sliding sleeves which each have an inner barrel of substantially circular cross section and which are mounted parallel to each other on the outside of one of the side walls of the control cabin, with the inner barrels directed substantially in the vertical direction. The linear guide arrangement of the support frame comprises two substantially vertically directed sliding rods of circular cross section which each extend through a through-hole in the respective sliding sleeve of the linear guide arrangement of the control cabin. The through-hole of each of the sliding sleeves is delimited by elongate clamping strips, preferably of a suitable plastic material, of which the bearing pressure against the sliding rods of the support frame can be adjusted by means of an adjusting device. This design considerably increases the stability of the control cabin, and any noises resulting from play between the linear guide arrangements of the support frame and of the control cabin can be eliminated or at least reduced.

It will be appreciated that the invention can be varied and modified in many different ways within the scope of the following patent claims and in relation to what is shown and described in the illustrative embodiment below. For example, the linear guide arrangements could be designed in many other ways instead of as sliding sleeves which slide along sliding rods. For example, they could be designed with wheels which roll along some form of guide. Moreover, the linear guide arrangement of the control cabin, instead of being screwed onto the outside of the side wall, could be integrated with the load-bearing structure of the control cabin, e.g. by load-bearing beams or rods which project out through the wall of the control cabin from the load-bearing structure.

### Brief description of the drawings

The invention is described below with reference to the accompanying drawings which depict an illustrative embodiment of the invention and in which:
- Fig. 1: is a perspective view of a timber truck with a loading crane mounted thereon, including a cabin arrangement according to the invention in a lowered position;
- Fig. 2: is a perspective view according to Fig. 1 seen in another direction and with the control cabin in a raised working position;
- Fig. 3: shows the control cabin according to the invention, without internal fittings, in a perspective view obliquely from the front and from the side that is intended to be directed towards the crane post, with its linear guide arrangement in the form of two sliding sleeves mounted on the side wall;
- Fig. 4: shows the control cabin according to Fig. 3 with the support frame, and with its linear guide arrangement in the form of two sliding rods in displaceable engagement with the sliding sleeves;
- Fig. 5: shows the control cabin according to Fig. 4 in a perspective view obliquely from the front and from the side that is intended to be directed away from the crane post;
- Figs 6-7: show partially sectioned perspective views of the whole control cabin or its lower part, which figures illustrate in particular the strengthening load-bearing structure;
- Figs 8-9: show side views of the control cabin and the support frame, which are respectively in a lowered transporting position and a raised working position in relation to each other;
- Fig. 10: shows a slightly enlarged side view of the support frame, and of the sliding sleeves of the control cabin which serve as linear guide arrangement;
- Fig. 11: shows a cross section through the support frame and the sliding sleeves along the line XI-XI in Fig. 10;
- Figs 12-13: show enlarged perspective views of the transport-securing arrangement of the cabin arrangement;
- Figs 14-15: show enlarged perspective views of the work-securing arrangement of the cabin arrangement; and
- Fig. 16: shows an exploded view of a sliding sleeve.

### Detailed description of an embodiment of the invention

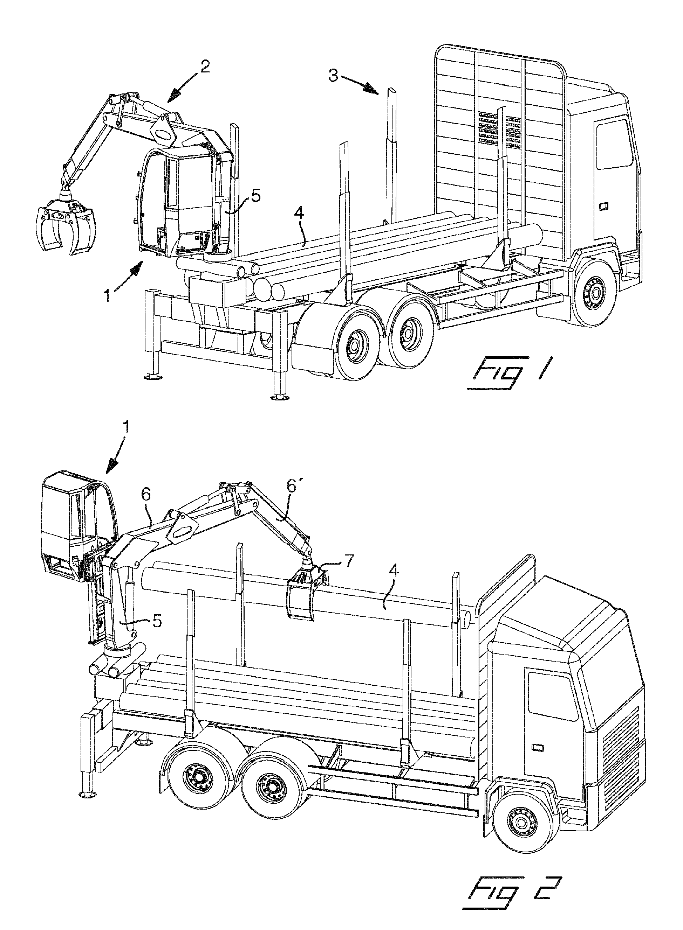

Reference is first made to Figs 1-2, which show a conceivable use of a cabin arrangement comprising a control cabin 1 according to the invention mounted on a loading crane 2 which is placed at the rear end of a timber truck 3. The control cabin is shown in Fig. 1 in a lowered transporting position, which is the position that the control cabin adopts during transport and in which an operator can easily get in and out of the cabin, whereas Fig. 2 shows it in a raised working position in which the operator has a good view during the loading and unloading of timber 4 onto and from the cargo space of the timber truck. The crane is of the type which has an upright crane post 5 and two crane jibs 6, 6', which are connected in an articulated manner to the crane post and to each other, and a timber grab 7 is mounted on the end of the outermost crane jib 6'. As will be seen, the control cabin 1 is mounted on the crane post 5 and is movable up and down along the latter, as will be described in more detail below. The crane can also be of the type that can be easily dismantled from the truck, such that the latter can also be driven without the crane, if so desired.

However, it should be understood that a control cabin according to the invention could also be used on other types of cranes and for other purposes, e.g. cranes mounted on other types of vehicles, or fixed cranes at timber depots and the like.

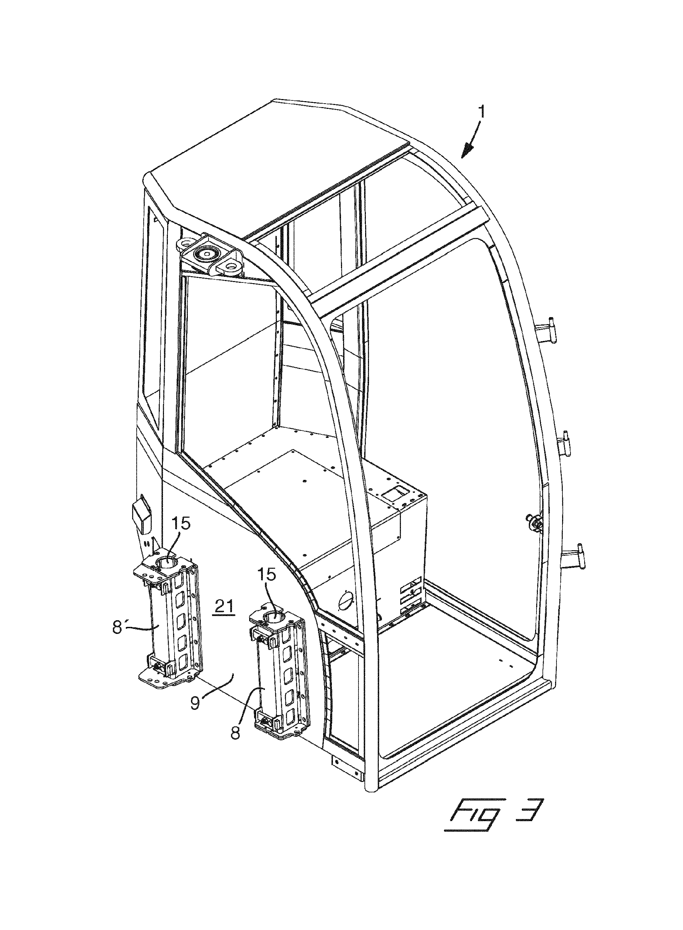

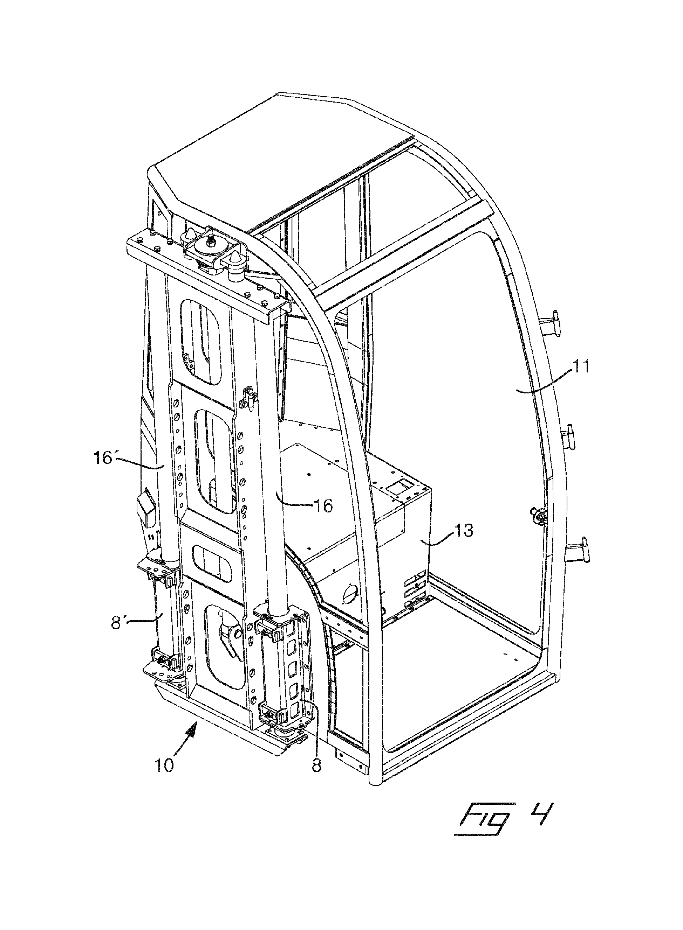

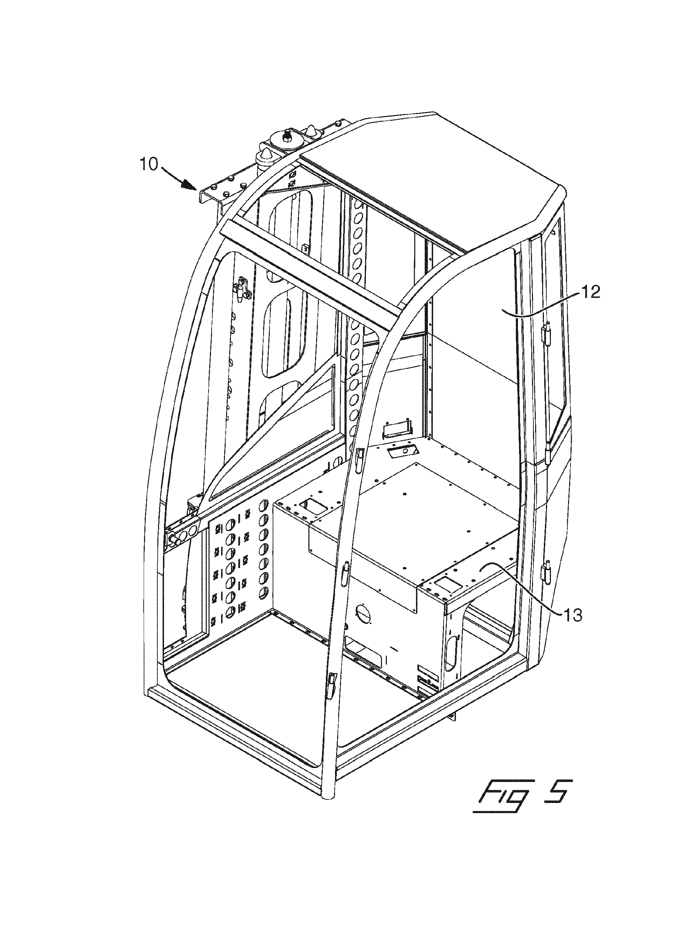

Reference is now made to Figs 3-5, which show perspective views of a control cabin according to the invention without fittings. More specifically, the control cabin in Fig. 3 is shown with only the linear guide arrangement in the form of two sliding sleeves 8, 8' mounted on a side wall 9 of the control cabin, while Figs 4 and 5 also show a support frame 10 mounted on the control cabin, which is intended to be connected to the crane post.

Of the control cabin in the figures, only the shell is shown, while the internal coverings, the door, the controls and other equipment have been omitted for greater clarity. The control cabin is built in a manner known *per se* in the form of a framework of metal profiles which support cover plates made of thin sheet metal for formation of walls, floor and roof, and also transparent plastic panels for formation of window areas. As will be seen from the figures, the proportion of window areas has been prioritized in order to give the crane operator the best possible view during loading. For example, the whole front face 11 is in the form of a window, and the omitted door, which is intended to be placed in an opening 12 in the left-hand side wall, is also envisaged to have window areas of substantially identical design as on the opposite, right-hand side. Inside, in the rear/lower part of the control cabin, there is a box-shaped, raised part 13 which is made up of metal profiles and sheet metal and which is intended as a base for a seat for the crane operator and is also designed as a support structure for bearing the weight of the control cabin and of the crane operator and for transferring this weight to the crane post 5 via the support frame 10, as will be described in more detail below.

Fig. 3 shows the control cabin in a perspective view obliquely from the front and from the side of the control cabin which, in the state when mounted on a crane, is intended to be directed towards the crane post. This right-hand side wall of the control cabin is provided, in its upper and front part, with a transparent plastic panel for forming a window area 14, while a lower, rear part is made of sheet metal. This sheet-metal part serves as a supporting wall portion 9 of the control cabin, via which the latter is connected to the crane post. For this purpose, a linear guide arrangement is in the form of two sliding sleeves 8, 8' connected to the wall portion 9, preferably by screwing.

Each of the sliding sleeves 8, 8' has a continuous, substantially vertically directed barrel 15 with a substantially circular cross section, and in Figs 4 and 5 the control cabin is shown connected to a support arm 10 comprising a linear guide arrangement in the form of two sliding rods 16, 16' of circular cross section, and each of the sliding rods is guided through the barrel in one of the sliding sleeves of the cabin. The more detailed design of the sliding sleeves and the support arm will be described in more detail below.

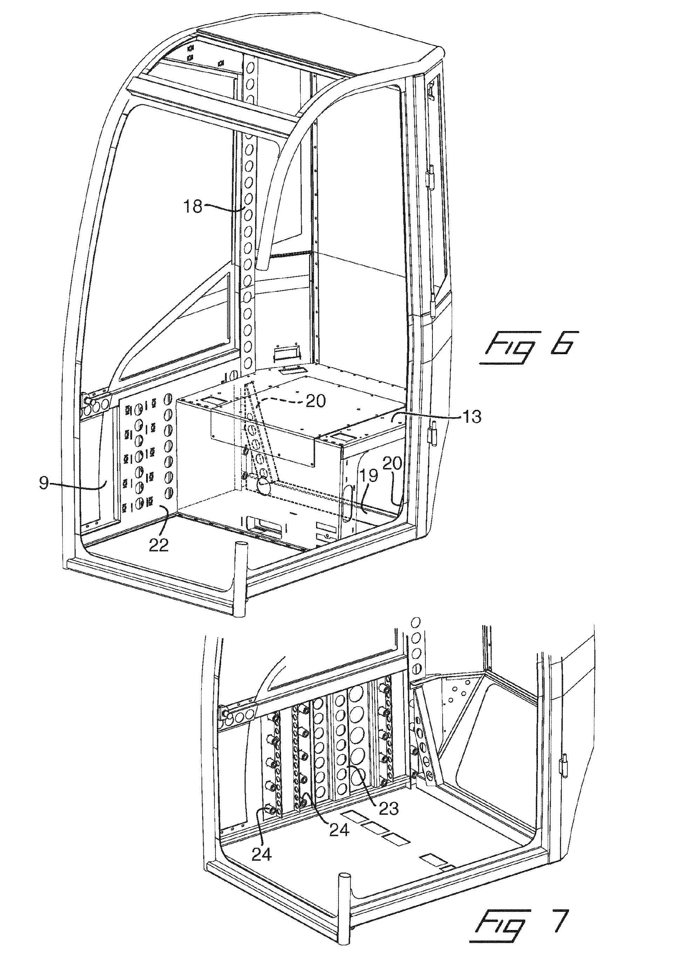

Figs 6 and 7 are partially sectioned perspective views of the control cabin or the lower part of same, which figures illustrate the supporting structure which gives the control cabin the required stiffness and strength and allows the weight of the control cabin and of the crane operator to be transferred in a stable and safe manner to the crane post via the support frame and the linear guide arrangement placed low on the control cabin in the form of the advantageously short sliding sleeves 8, 8'. To achieve this, the supporting wall portion 9 of the control cabin is additionally strengthened, on the one hand by cooperating with the box-shaped and raised part 13 for the seat, which in this way comes to function as a box girder, and, on the other hand, by means of a reinforcing frame in the form of side pillars 18 in the side walls, and a floor beam 19 which is placed immediately behind the crane operator. For the purpose of further stiffening the frame, diagonal braces 20 are arranged in the corners between each side pillar and the floor beam. In order to minimize the weight despite the strengthened structure, the supporting wall portion 9 is designed as a sandwich structure with an outer wall plate 21 and an inner wall plate 22, which are joined via a trapezoidal profiled plate 23 lying between them, as will be seen from Fig. 7 where the inner wall plate has been removed. Moreover, screw holes for the sliding sleeves are designed as sleeves 24 with an internal thread, which sleeves 24 extend between the outer and inner wall plates. In order to further reduce the weight, the inner wall plate, the trapezoidal profiled plate and the side pillars are designed with weight-reducing holes.

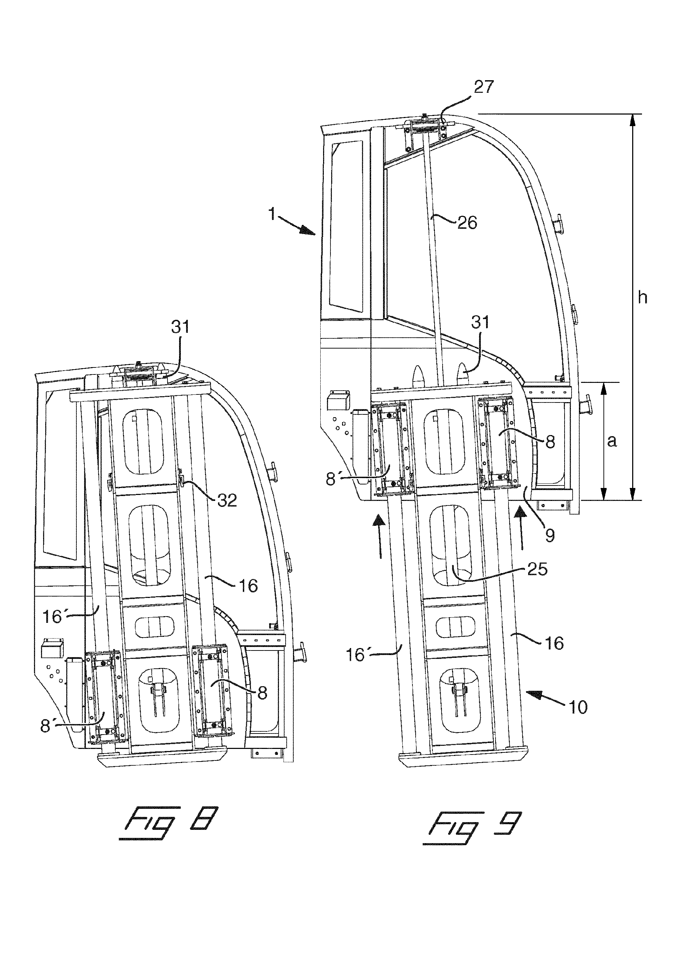

Figs 8 and 9 show side views of the control cabin with a mounted support frame 10, from the side of the control cabin that is intended to be directed towards the crane post. Fig. 8 shows the control cabin and the support frame arranged in a lowered transporting position in relation to each other, while Fig. 9 shows the control cabin and the support frame arranged in a raised working position in relation to each other. To produce the movement between the control cabin and the support frame, a long hydraulic cylinder 25 is connected with its cylinder part in the support frame, while the outer end of a piston rod 26 is connected, via an attachment 27, to the control cabin in the area of the roof thereof. The hydraulic cylinder 25, however, bears only the vertical load from the control cabin, whereas all forces in the horizontal direction and moments are taken up via the respective linear guide arrangements 8, 8'; 16, 16' of the control cabin and of the support frame and are transmitted via these to the support frame 10 and onwards from there to the crane post 5.

Given the above-described and illustrated strengthening of the supporting wall portion 9 in combination with the box-shaped, raised part 13 for the seat and the strengthening frame 18, 19, it is possible to secure the linear guide arrangement 8, 8' of the control cabin advantageously low down on the side wall 9 of the control cabin. Therefore, compared to similar, previously known control cabins, it is possible for larger window areas to be arranged on the side wall of the control cabin that is directed towards the crane post, without the view being impeded by any kind of support frame or linear guide arrangement. In the raised working position of the control cabin, it has a setting as shown in Fig. 9, in which the crane operator has a much improved view, especially downwards, impeded only to a very slight extent by the piston rod 26.

Another factor which makes it easier to make the sliding sleeves 8, 8' of the linear guide arrangement of the control cabin short, thereby ensuring that they do not conceal too much of the side wall 9 of the control cabin, is that the sliding sleeves have a structure that eliminates or at least minimizes any clearance or play between the sliding rods of the support frame and the sliding sleeves of the control cabin. The combination of short sliding sleeves and considerable play between these and the sliding rods would otherwise make the fastening of the control cabin unstable and would be uncomfortable for the crane operator. The structure of the sliding sleeves is additionally such that the extent of the play can be readjusted, as will be described in more detail below.

As will be seen from Figs 8 and 9, the control cabin and the support frame are mounted at a slight inclination with respect to each other. In the illustrative embodiment shown, this is done so that the control cabin in the raised position will be moved slightly further from the cargo space of the timber truck, and therefore from the timber load, when the front of the control cabin is directed forwards towards the cargo space. Any inclination between the control cabin and the support frame can be varied according to requirements, depending on the type of crane and on the specific use.

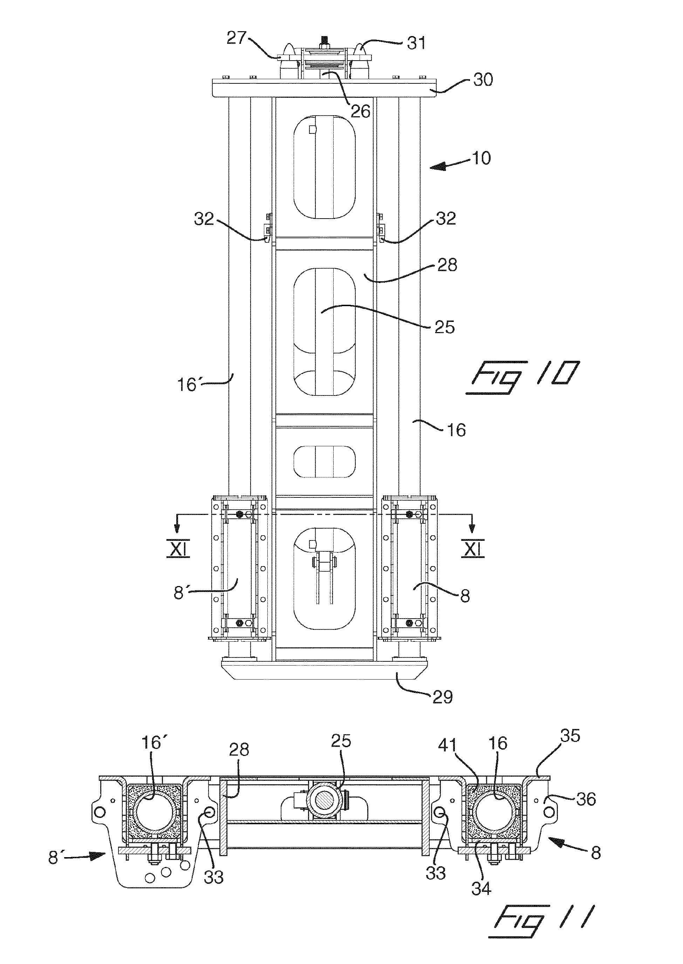

Fig. 10 shows a slightly enlarged view of the support frame 10 together with the sliding sleeves 8, 8' of the control cabin, seen from the side that is intended to be directed towards the crane post, and Fig. 11 shows a cross section through the support frame and the sliding sleeves in a section along the line XI-XI in Fig. 10. The support frame is made up of a central box-shaped section 28 which, for weight reduction purposes, is provided with openings on both sides, and inside which the hydraulic cylinder 25 is accommodated. The sliding rods 16, 16' extend parallel to and on either side of the box-shaped section 22, and the sliding rods and the box-shaped section are mutually connected at their ends via a lower and an upper cross-beam 29, 30. The attachment of the support frame to the crane post has to be adapted to the type of crane and may therefore vary from case to case, for which reason it is not shown in detail and is not described here.

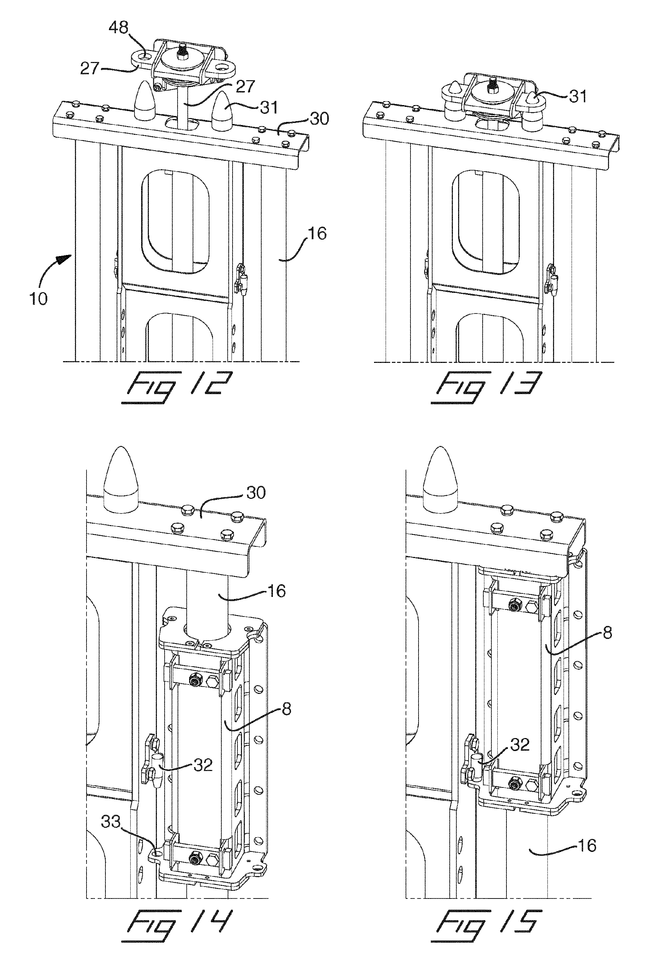

In the upper edge of the upper cross-beam 30, there are two conical and elastic elements 31 made of rubber or plastic which are intended to serve as shock-absorbing cushions when the control cabin is lowered and reaches its lowered transport position, as is shown in Fig. 10 and in the enlarged perspective views of the upper end of the support frame in Figs 12 and 13, by means of the shock-absorbing cushions fitting into corresponding holes 48 of suitable size arranged in the attachment 27 for the piston rod 26 of the hydraulic cylinder in the upper part of the control cabin. The shock-absorbing cushions and associated holes come to serve as a transport securing arrangement for the control cabin, which eliminates or at least reduces the movement of the control cabin in relation to the support frame and the crane post during transport.

In order to stabilize the control cabin in the raised position too, the cabin arrangement is provided with a corresponding work-securing arrangement which is best seen in Figs 10, 11, 14 and 15. This includes downwardly directed pegs 32 arranged on each side edge of the box-shaped section 28 of the support frame, and, in the raised working position of the control cabin, these pegs 32 are designed to engage with corresponding holes 33 of suitable size in a lower flange edge of a respective guide sleeve 8, 8', as is shown in Figs 11, 14 and 16.

In the embodiment shown, the upwardly directed pegs 31 of the transport-securing arrangement are designed with a central hard core of steel or other suitable material which is lined with an elastic material, such as rubber or plastic, in order to provide a shock-absorbing effect. Corresponding downwardly directed pegs 32 of the work-securing arrangement are, by contrast, not lined with an elastic, shock-absorbing material. However, within the scope of the invention, it is possible to choose to use a shock-absorbing, elastic material or not, both for the pegs of the transport-securing arrangement and the pegs of the work-securing arrangement. However, it is preferable that both types of pegs, at their thickest end, have a cross-sectional dimension that is greater than corresponding holes with which they are intended to engage such that the conical parts of the pegs bear against the circumferential edge of the holes in the transport-securing arrangement and the work-securing arrangement. In this way, a bearing between the pegs and the holes is obtained which is free of play and which eliminates the occurrence of disruptive noise when driving the vehicle and working with the crane.

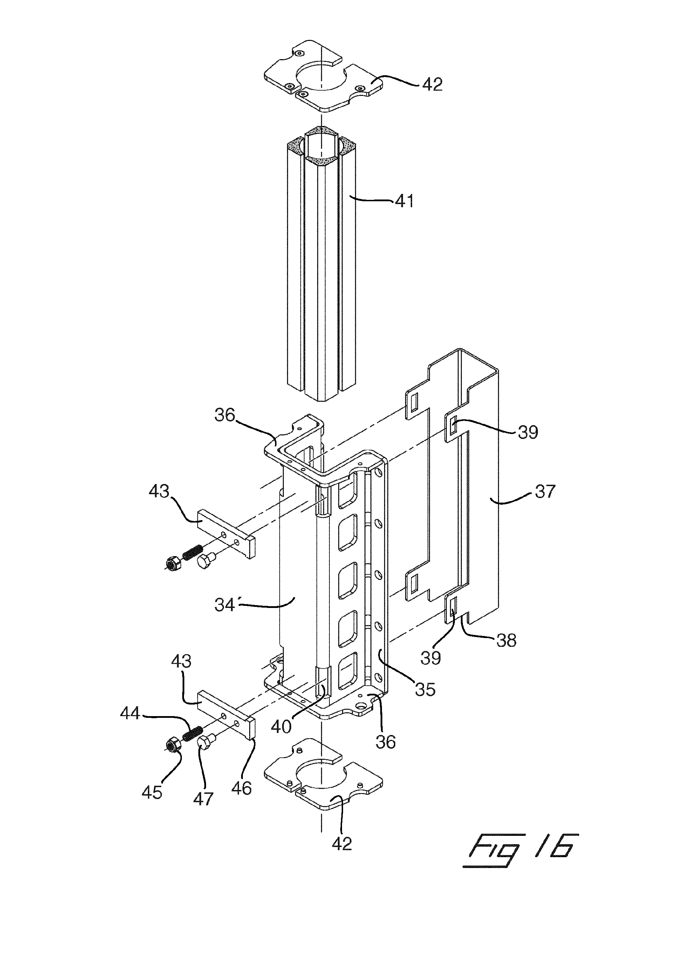

For a more detailed description of the sliding sleeves 8, 8' of the control cabin, reference is now made to Fig. 16 in combination with Fig. 11. As will be seen, each of the sliding sleeves comprises an outer sleeve part 34 of U-shaped cross section which is provided with longitudinal flanges 35 along both of its long edges, in which holes are formed for screwing against the wall part 9 of the control cabin, and also end flanges 36 along both of its end edges, in which are formed, among other things, the abovementioned stabilizing engagement holes 33 for the work-securing arrangement. The sliding sleeve further comprises an oppositely directed inner, U-shaped sleeve part 37 which has a narrower U shape than the outer one in such a way that it can be accommodated in the outer sleeve part. At its longitudinal edges, the inner sleeve part is designed with a total of four projections 38 which are arranged in pairs and in which rectangular holes 39 are formed such that, when the inner and outer sleeve parts are fitted together, the projections 38 pass through correspondingly positioned holes 40 formed in the outer sleeve part 34, such that the outer ends of the projections with the rectangular holes 39 come to be situated on the outside of the outer sleeve part. The continuous inner barrel of the sliding sleeve, having a substantially circular cross section, is formed by four elongate clamping strips 41, preferably made of plastic or rubber, which are accommodated in the inner space delimited by the inner and outer sleeve parts, wherein those surfaces of the clamping strips directed towards the sliding rods are designed with a partially circular cross section, in such a way that the clamping strips come to surround and bear against substantially the entire circumferential surface of the sliding rods. To prevent the clamping strips from falling out of the sliding sleeve, end stops in the form of thin plate coverings 42, with recesses for the sliding rod passing through them, are screwed onto the ends of the end flanges 36 of the outer sleeve part. With the aid of two flat tensioning devices 43 which are guided in through the rectangular holes 39 in the projections of the inner sleeve part on the outside of the outer sleeve part, the bearing pressure of the clamping strips 41 against the sliding rod 16, 16' can be adjusted by tightening a tightening screw 44 which is screwed into a threaded hole in the middle of the tensioning device 43 and of which the inner end comes to be pressed against the outer surface of the outer sleeve part in such a way that the inner and outer sleeve parts are drawn towards each other such that the clamping strips are pressed against the sliding rod. In this way, it is possible to adjust the bearing pressure of the clamping strips against the sliding rod such that there is in practice no clearance or play between the sliding sleeve and the sliding rod, and it is also easy to readjust the bearing pressure as the parts become worn. The tensioning device also comprises a stop nut 45 for the tightening screw 44, so as to prevent the latter from being inadvertently unscrewed from the hole in the tensioning device, and stop lugs 46 at one end of the tensioning device, and a stop screw 47 slightly further from the end, which are intended to prevent the tensioning device from being able to slide out from the holes 39 in the projections by means of the fact that they form a stop on each side of one of the projections 38.

## Claims

1. A cabin arrangement of the type which is intended to be mounted on a crane post (5) of a crane (2), comprising a control cabin (1) which delimits an internal space for a crane operator when controlling the crane, a support frame (10) which is adapted to be firmly connected to the crane post, a first linear guide arrangement (8, 8') which is connected to the control cabin and is in displaceable engagement with a matching second linear guide arrangement (16, 16') which is connected to the support frame, and a lifting arrangement comprising a hydraulic cylinder (25) which is telescopically extensible and retractable in such a way that the control cabin is securely connected to the crane post via the support frame while at the same time, by means of the first and second linear guide arrangements and by extension or retraction of the hydraulic cylinder, it is movable along the crane post between a lowered transporting position and a raised working position, **characterized in that** it comprises a transport-securing arrangement having at least one first transport-securing element (48), which is connected to and movable together with the control cabin (1), and at least one second transport-securing element (31), which is connected to the support frame (10), the first and second transport-securing elements being designed to automatically engage with each other when the control cabin reaches its lowered transporting position.

2. The cabin arrangement according to claim 1, **characterized in that** the first and second transport-securing elements (48, 31) are designed to automatically engage with each other when the control cabin reaches its lowered transport position.

3. The cabin arrangement according to any one of the preceding claims, **characterized in that** the first transport-securing element (48) is mounted in the area of an upper part of the control cabin.

4. The cabin arrangement according to any one of the preceding claims, **characterized in that** the second transport-securing element (31) is mounted in the area of an upper part of the support frame (10).

5. The cabin arrangement according to any one of the preceding claims, **characterized in that** the one transport-securing element (31) has a conical or tapering shape, while the other transport-securing element (48) is designed as a hole or a recess against the inner circumference of which the conical transport-securing element bears in the lowered transporting position, wherein the conical transport-securing element is directed such that it is pressed in to bear against the inner circumference of the hole or recess of the second transport-securing element when the control cabin is pressed downwards by the effect of the force of gravity.

6. The cabin arrangement according to claim 5, **characterized in that** at least one of the inner circumference of the hole-shaped transport-securing element (48) or the conical transport-securing element (31) comprises an elastic material which is adapted to bear against the other transport-securing element in order to provide shock-absorbing and sound-absorbing contact in the transporting position.

7. The cabin arrangement according to any one of the preceding claims, **characterized in that** it also comprises a work-securing arrangement having at least one first work-securing element (33), which is connected to and movable together with the control cabin (1), and at least one second work-securing element (32), which is connected to the support frame (10), the first and second work-securing elements being designed to automatically engage with each other when the control cabin reaches its raised working position.

8. The cabin arrangement according to claim 7, **characterized in that** the first and second work-securing elements (33, 32) are designed to automatically engage with each other when the control cabin reaches its raised working position.

9. The cabin arrangement according to either of claims 7 and 8, **characterized in that** the first work-securing element (33) is mounted in the area of a lower part of the control cabin.

10. The cabin arrangement according to any one of claims 7-9, **characterized in that** the second work-securing element (32) is mounted in the area of an upper part of the support frame.

11. The cabin arrangement according to any one of the preceding claims, **characterized in that** the linear guide arrangement of the control cabin comprises a sliding sleeve (8, 8') with a substantially vertically directed tubular barrel (15) of substantially circular cross section, and the linear guide arrangement of the support frame (10) comprises a sliding rod (16, 16') of circular cross section, such that the sliding sleeve of the control cabin is movable along the sliding rod of the support frame.

12. The cabin arrangement according to any one of claims 1-10, **characterized in that** the linear guide arrangement of the control cabin comprises two sliding sleeves (8, 8'), each with a substantially vertically directed tubular barrel (15), which are movable along two sliding rods (16, 16') of the linear guide arrangement of the support frame.

13. The cabin arrangement according to claim 11 or 12, **characterized in that** the internal diameter of the inner barrel (15) of each of the one or more sliding sleeves (8, 8') of the control cabin is delimited by elongate clamping strips (41), which surround and bear against the sliding rods (16, 16') of the linear guide arrangement of the support frame.

14. The cabin arrangement according to claim 13, **characterized in that** those surfaces of the clamping strips (41) that bear against the sliding rods (16, 16') have a partially circular shape that matches the cross-sectional shape of the sliding rods.

15. The cabin arrangement according to claim 13 or 14, **characterized in that** the bearing pressure of the clamping strips (41) against the sliding rods (16, 16') is adjustable by means of an adjusting arrangement.
